## Europäisches Patentamt

## European Patent Office

## Office européen des brevets

(19)

(11) Veröffentlichungsnummer: **0 004 267**
**B1**

(12)

# EUROPÄISCHE PATENTSCHRIFT

(45) Veröffentlichungstag der Patentschrift:
28.10.81

(21) Anmeldenummer: 78200227.3

(22) Anmeldetag: 06.10.78

(51) Int. Cl.³: **F 16 K 31/05**

(54) **Absperrorgan mit Achsialkraftbegrenzung für den Stellantrieb.**

(30) Priorität: 16.03.78 CH 2859/78

(43) Veröffentlichungstag der Anmeldung:
03.10.79 Patentblatt 79/20

(45) Bekanntmachung des Hinweises auf die Patenterteilung:
28.10.81 Patentblatt 81/43

(84) Benannte Vertragsstaaten:
**DE FR GB SE**

(56) Entgegenhaltungen:
**AT-B-250 749**
**DE-B-1 236 293**
**DE-B-1 928 404**
**DE-C-473 540**
**DE-C-616 112**
**US-A-2 204 521**
**US-A-3 965 759**

(73) Patentinhaber: **BBC Brown, Boveri & Cie.
(Aktiengesellschaft), CH-5401 Baden (CH)**

(72) Erfinder: **Bernasconi, Felix R., Waldgartenstrasse 5,
CH-8125-Zollikerberg (CH)**

ACTORUM AG.

Absperrorgan mit Achsialkraftbegrenzung für den Stellantrieb

Die vorliegende Erfindung betrifft ein Absperrorgan gemäss dem Oberbegriff des Patentanspruchs 1, der sich auf ein Absperrorgan nach der DE-B 1 928 404 bezieht.

Es sind Absperrarmaturen bekannt, bei denen die Grenzlagen der beweglichen Teile, im allgemeinen also die Spindelendlagen, mit Wegschaltern überwacht und gesteuert werden. Versagt diese Steuerung oder wird sie überbrückt, so erfolgt die Ausschaltung mit Drehmomentschaltern, wobei die Ausschaltung gewöhnlich durch das auf die Spindelmutter wirkende Reaktionsmoment erfolgt. Dabei ist aber wegen der Trägheit des Systems Antriebsmotor und Getriebe das auf die beanspruchten Armaturenteile tatsächlich ausgeübte Moment grösser als das am Momentschalter eingestellte Moment. Das tatsächlich auftretende Moment kann dabei so gross werden, dass es die betreffenden Armaturenteile beschädigt. Wegen der unsicheren Reibungsverhältnisse im Antrieb und zwischen Spindelmutter und Spindel ist das Drehmoment ein unzuverlässiges Mass für die axiale Spindelkraft.

Dazu kommen die Beanspruchungen durch Dehnungsdifferenzen infolge Temperaturänderungen, wenn die Spindel in den Endlagen festsitzt, wobei achsiale Verspannungen mit der Gefahr des Ausknickens oder Zerreissens der Spindel, Festsitzens bzw. Festfressens von Keilschiebern usw. auftreten können.

Solche Störungen können kostspielige Betriebsunterbrechungen oder -einschränkungen verursachen. Voraussetzung für den Einsatz solcher Armaturen ist daher grösste Betriebssicherheit. Dies gilt in besonderem Masse für Kernkraftwerke, weil bei diesen für die Wartung wegen der Gefahr der Strahleneinwirkung nur wenig Zeit zur Verfügung steht.

Aus diesem Grunde wurde auch schon (DE-B-1 928 404) ein Motorventilantrieb mit von der axialen Spindelkraft abhängiger Endstellunsabschaltung versehen, wobei in beiden Bewegungsrichtungen der Ventilgewindespindel federnd nachgiebige Elemente vorgesehen sind, die in den Endstellungen eine zur jeweiligen Bewegungsrichtung der Gewindespindel gegenläufige Verschiebung der Spindelmutter ermöglichen, von welcher Verschiebung die Betätigung der Endschalter für den Antriebsmotor abgeleitet wird.

Es ist ferner durch die DE-C 473 540 ein Ventilspindelantriebsgetriebe bekannt, bei dem sowohl zum Öffnen als auch zum Schliessen des Ventils der Motor zunächst mit Freilauf im Getriebe anläuft und danach erst schlagartig mit dem Getriebe gekuppelt wird, um ein Lösen des Verschlussorgans aus der Schliessstellung bzw. ein vollkommen dichtes Schliessen durch überhöhten Anpressdruck zu erzielen. Das Ausschalten des Motors erfolgt hierbei durch das auf die Spindelmutter wirkende Drehmoment.

Bei dieser Art des Antriebs ist es nicht ausgeschlossen, dass die obengenannten Überbeanspruchungen auftreten können, und zwar insbesondere ein Festfressen, wenn die Verschlussorgane als Keilschieber ausgebildet sind.

Mit der vorliegenden, im kennzeichnenden Teil des Patentanspruchs 1 definierten Erfindung soll ein Absperrorgan geschaffen werden, bei dem durch achsialkraftbegrenzende Elemente und ein hartes Abfangen des Drehmomentes durch starre Anschläge mit Sicherheit eine Überlastung der Spindel und deren Antriebsglieder und somit eine Beschädigung bzw. ein Festklemmen vermieden werden.

Im folgenden wird der Erfindungsgegenstand unter Bezugnahme auf die Zeichnung näher beschrieben. In dieser stellen dar:

Fig. 1 einen schematischen Längsschnitt durch eine Ausführungsform des Absperrorgans, wobei nur die erfindungswesentlichen Teile dargestellt sind,

Fig. 2 und 3 Details aus Fig. 1 in grösserem Massstab,

Fig. 4 das Absperrorgan während eines Öffnungsvorganges,

Fig. 5 das Absperrorgan im vollständig geöffneten Zustand, und

Fig. 6 das Absperrorgan im geschlossenen Zustand.

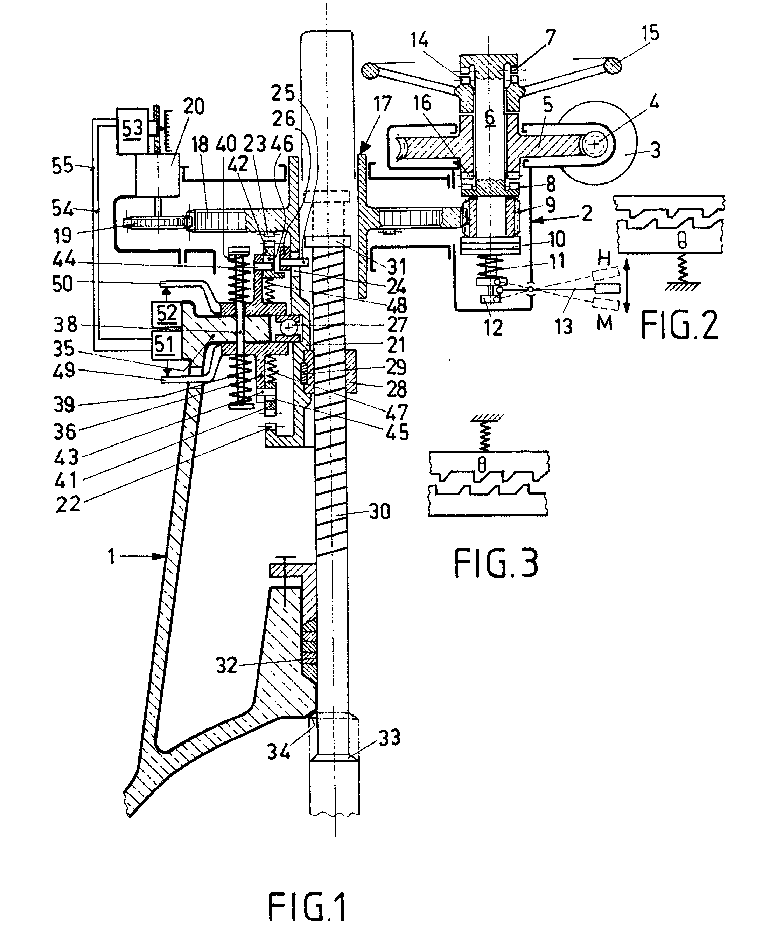

In Fig. 1 bezeichnet 1 das Gehäuse des Absperrventils, dessen Absperrelemente, bei denen es sich um einen Keilschieber, Kegelsitz oder dergleichen mit den zugehörigen Sitzelemente handeln kann, als für die Erfindung unwesentlich in der Darstellung weggelassen sind. Am oberen Teil des Gehäuses ist der Antriebsblock 2 angeflanscht. Diese Bauweise des Antriebsblocks ermöglicht im Falle einer Funktionsstörung seine schnelle Demontage, ohne das ganze Ventil ausbauen zu müssen und ohne dass die mechanische Blockierung und elektrische Verriegelung verändert wird.

Der Antriebsblock weist einen umsteuerbaren Elektromotor 3 auf, der über eine Schnecke 4 ein Schneckenrad 5 antreibt. Innerhalb der Nabe des Schneckenrades 5 ist drehbar eine Umsteuerwelle 6 mit zwei Stirnklauenkränzen 7 und 8 und einem am unteren Ende auf ihr drehbar gelagerten Stirnzahnritzel 9 angeordnet. Den unteren Abschluss bildet eine Rutschkupplung 10 zur Mitnahme des Ritzels 9, deren Durchzugsmoment durch eine Feder 11 eingestellt werden kann, sowie eine Schiebemuffe 12, in die ein Umschalthebel 13 eingreift.

Durch Schwenken des Hebels 13 kann die Welle 6 in eine der beiden strichliert gezeichneten Stellungen H = Handantrieb und M = Motorantrieb gebracht und damit entweder mit einem Kupplungszahnkranz 14 eines Handrades 15 oder einem an der Unterseite des Schneckenrades 5 vorgesehenen Kupplungszahnkranz 16 zum Eingriff gebracht werden. Die Rutschkupplung 10 verhindert im Falle eines zu grossen Widerstandes bei der Ventilbetätigung eine Überbeanspruchung des Stellgetriebes.

Das Zahnritzel 9 steht mit dem Zahnkranz 18 eines Zahnradkörpers 17 im Eingriff, der seinerseits mit einem Zahnrad 19 eines Hubanzeigers 20 kämmt.

Der Zahnradkörper 17 setzt sich nach unten in einen im wesentlichen zylindrischen Mantel 21 fort, der an seinem unteren Ende ein Sperrwerkselement in Form eines Sperrklauenkranzes 22 aufweist. Ein zweiter, gleich grosser Sperrklauenkranz 23 mit umgekehrter Sperrrichtung befindet sich an der Unterseite des Zahnkranzes 18.

Der Mantel 21 weist ferner in seinem oberen Teil eine Reihe am Umfang verteilter Schlitze 24 auf, in denen leicht verschieblich Bolzen 25 sitzen, die mit einem den Mantel 21 umgebenden Ring 26 fest verbunden sind. Dieser Ring mit den Bolzen kann auf und ab gleiten und ist durch letztere gegen Drehen gesichert. Am äusseren Umfang des Mantels 21 sitzt in einer Nut ein Achsialwälzlager 27 und in seinem Inneren ist eine Spindelmutter 28 in achsialer Richtung fixiert und durch einen Keil 29 gegen Verdrehung bezüglich des Mantels 21 gesichert. Die Mutter 28 dient zur Achsialverstellung der Ventilspindel 30, die an ihrem oberen Ende einen Bund 31 und unterhalb der Stopfbüchsenpackung 32 einen Kegel 33 zur Rückdichtung zwecks Entlastung der Stopfbüchse bei voll geöffnetem Ventil aufweist, wobei der Kegel 33 auf den Sitz 34 gedrückt wird.

Das Achsialwälzlager 27, im vorliegenden Falle ein Achsialkugellager, befindet sich bei der in Fig. 1 gezeigten Konfiguration des Getriebes im Bereich eines Flansches 35, der gleich hoch ist wie das Achsiallager 27 und als Auflager für zwei Kraftbegrenzungsringe 36, 37 dient, die durch eine Anzahl über den Umfang des Flansches 35 verteilt angeordneter Führungsstangen 38 in Richtung der Spindelachse geführt und gegen Verdrehung gesichert sind. An den Enden der Führungsstangen 38 abgestützte Federn 39, 40 pressen die beiden Kraftbegrenzungsringe mit einer gewissen Vorspannung auf den Flansch 35. Das Achsiallager 27 ist mit seinem äusseren Rand somit federnd nachgiebig zwischen den beiden Kraftbegrenzungsringen 36 und 37 eingespannt.

Am freien Rand des mantelförmigen Teiles der beiden Kraftbegrenzungsringe ist je ein in der Richtung der Spindelachse verschiebbarer Sperrklauenkranz 41 bzw. 42 vorgesehen, der durch eine Anzahl am Umfang verteilter Bolzen 43 und 44, die in Schlitze 45 und 46 der Kränze 41 und 42 eingreifen, gegen Verdrehung gesichert, in Richtung der Spindelachse aber, entsprechend der Länge der Schlitze 45 und 46, verschiebbar ist. Durch eine Anzahl am Umfang verteilter Federn 47, 48, die sich einseitig am betreffenden Kraftbegrenzungsring abstützen, werden die Sperrklauenkränze 41 und 42 in ihre unterste bzw. oberste Endlage gedrückt.

Die beiden Kraftbegrenzungsringe 41 und 42 weisen je einen gekröpften Schaltarm 49 und 50 auf, die zur Betätigung zweier elektrischer Schalter 51 und 52 dienen.

Der untere Schalter 51 ist mit einem Endschalter 53 über Leiter 54, 55 elektrisch verbunden. Dieser Endschalter 53 sitzt auf dem Hubzeiger 20 und wird von diesem in der unteren Endstellung betätigt.

Durch eine nicht dargestellte Überbrückungsschaltung bekannter Bauart im Gehäuse des Endschalters 53 wird erreicht, dass beim Öffnen des Schalters 51 die Stromzufuhr zum Motor 3 aufrecht bleibt.

Die Fig. 1 zeigt die Ventilspindel 30 in einer Zwischenstellung zwischen «Geschlossen» und «Vollständig offen». In dieser Stellung wirken auf die Spindelmutter 29 keine Kräfte ein, da das Gewicht der Ventilspindel und des daran befestigten Absperrelementes (Schieberplatte oder dergleichen) durch die Stopfbüchsenreibung kompensiert wird. Da die Federn 39 und 40 der Kraftbegrenzungsringe 36 und 37 mindestens so stark vorgespannt sind, dass sie Gewicht ± Reibung der Spindel und des Absperrelementes sowie die Stopfbüchsenreibung und hydraulische Spindelkraft überwinden, befindet sich das Lager 27 in seiner Mittelstellung, bei der beide Kraftbegrenzungsringe auf dem Flansch 35 aufliegen.

Die Fig. 2 und 3 stellen die gegenseitige Lage der oberen bzw. unteren Sperrklauenkränze bei der in Fig. 1 gezeichneten Stellung der Ventilspindel dar. Weder die oberen noch die unteren Klauenkränze befinden sich demnach im Eingriff.

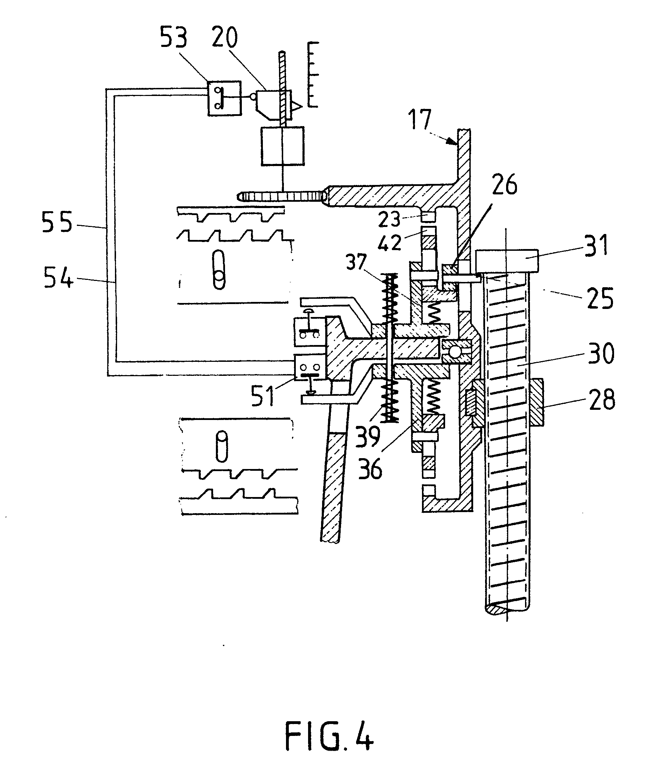

Fig. 4 stellt das Getriebe bei Beginn des Öffnungsvorganges dar. Dabei ist angenommen, dass es sich bei dem Absperrorgan um einen Keilschieber handelt, der zuerst einen grossen Widerstand bietet, da er von seinem Keilsitz losgerissen werden muss. Dabei verschiebt sich die motorisch angetriebene Mutter 28 mitsamt dem Zahnradkörper 17 nach unten, wodurch auch der untere Kraftbegrenzungsring 36 gegen den Widerstand der Federn 39 nach unten mitgenommen wird. Dabei wird durch den Schaltarm 50 der Schalter 51 geöffnet, wobei aber durch die im Gehäuse des Endschalters 53 vorgesehene Überbrückungsschaltung die Stromzufuhr zum Motor 3 erhalten bleibt. Der Antrieb der Spindelmutter wird also nicht unterbrochen.

In der unteren Endstellung der Spindel hat der Bund 31 am Spindelkopf den aus dem Bolzen 25 und dem Bund 26 bestehenden Niederhalter aus seiner Normallage (siehe Fig. 1) nach unten gedrückt und hält damit die Sperrverzahnung des oberen Sperrklauenkranzes 37 während eines gewissen, kurzen Spindelhubes ausser Eingriff von der Sperrverzahnung 23 des Zahnradkörpers 17. Wäre dieser Niederhalter, bestehend aus den Teilen 25 und 26, nicht vorhanden, so würde in dieser Phase des Spindelhubes die Verzahnung 23 des Zahnradkörpers 17 mit der Verzahnung des Sperrklauenkranzes 42 zum Eingriff kommen und damit wäre die weitere Drehung des Zahnradkörpers 17 und damit der Spindelmutter 28 blockiert.

Nach einem gewissen Spindelhub gibt der Bund 31 den Niederhalter wieder frei und dieser sowie der Sperrklauenkranz 42 kehren in ihre Normallage zurück. Bei dieser Stellung der Spindel ist aber der Widerstand für das Heben der Spindel 30 infolge Fortfalls der Keilwirkung an der Schieberplatte auf den normalen Wert, hervorgerufen durch das Eigengewicht und die Stopfbüchsenreibung, gesunken, wodurch die vorgespannten Federn 39 den Kraftbegrenzungsring 36 und damit das Lager 27 und den Zahnradkörper 17 in ihre Mittellage gemäss Fig. 1 zurückschieben. Dabei wird der untere Schalter 51 wieder geschlossen, durch die erwähnte Überbrückungsschaltung wird die Stromzufuhr zum Motor durch den Schaltvorgang aber nicht unterbrochen.

Beim weiteren Heben der Spindel bleiben die Antriebselemente in dieser Stellung, bis die Spindel in ihre obere Grenzlage gelangt, das Ventil also ganz geöffnet ist.

Während dieses ganzen Öffnungsvorganges bleiben die Sperrklauenkränze des Zahnradkörpers 17 bzw. der Kraftbegrenzungsring 36 und 37 ausser Eingriff.

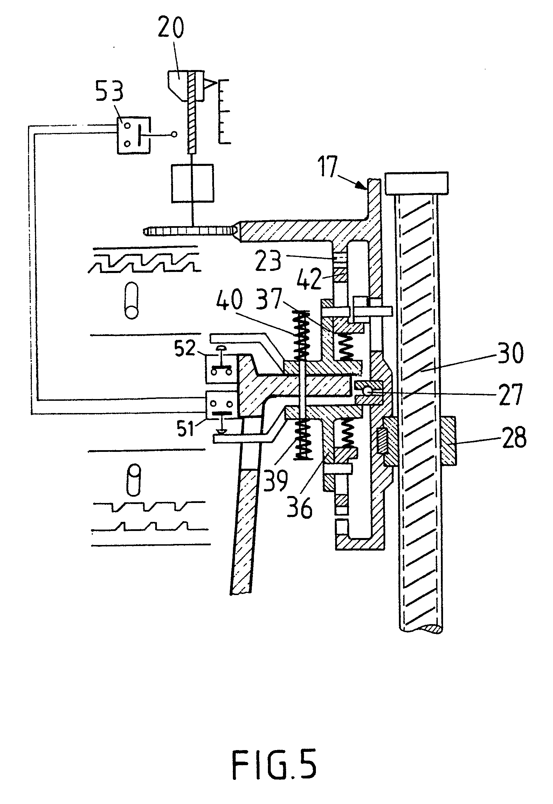

Fig. 5 stellt die Konfiguration des Getriebes bei vollständig offenem Ventil dar, wobei, wie in Fig. 1 strichpunktiert gezeigt, das Gehäuse durch die Sitzpaarung 33/34 der Rückdichtung nach aussen abgedichtet ist.

Bei Erreichen dieser Stellung wird die Spindel in der Längsrichtung blockiert und die weiterhin angetriebene Spindelmutter wird demnach gegen den Widerstand der unteren, auf den Kraftbegrenzungsring 36 wirkenden Federn 39 nach unten gedrückt. Damit verschieben sich auch der Zahnradkörper 17, das Lager 27 und der untere Kraftbegrenzungsring 36 nach unten, wobei die relative Lage der beiden unteren Sperrklauenkupplungszahnkränze 22 und 41 erhalten bleibt, d.h., sie kommen nicht zum Eingriff. Hingegen rastet der obere Zahnkranz 23 in den Zahnkranz 42 ein, da letzterer zusammen mit dem zugehörigen oberen Kraftbegrenzungsring 37 seine Lage beibehalten hat.

Bei dieser Verschiebung des unteren Kraftbegrenzungsringes 36 wird wiederum der Schalter 51 geöffnet, die Stromzufuhr zum Elektromotor 3 aber durch die erwähnte Überbrückungsschaltung im Endschaltergehäuse 53 aufrechterhalten. Der Endschalter ist dabei so eingestellt, dass er kurz vor diesem Einrasten der Zahnkränze 23 und 42 den Antriebsmotor 3 ausschaltet. Der infolge der Massenträgheit des Antriebs weiterrotierende Zahnradkörper 17 wird nach dem Einrasten schlagartig abgebremst, da der Rückdichtungskegel 33 auf seinem Sitz 34 zur Anlage gekommen ist. Die im Getriebe und im Antriebsblock nach dem Einrasten noch vorhandene kinetische Energie wird in der Rutschkupplung 10 durch Reibung vernichtet.

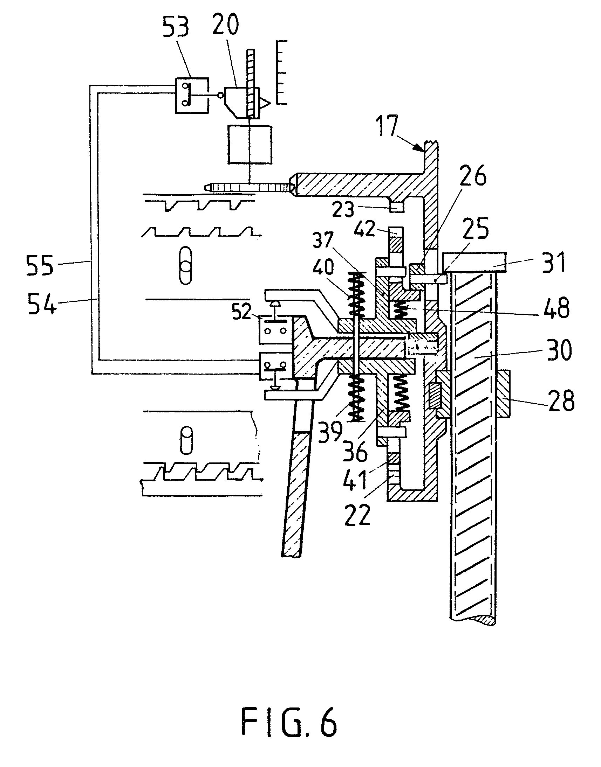

Der Schliessvorgang wird anhand der Fig. 5 und 6 erläutert, wobei Fig. 6 die Konfiguration bei vollständig geschlossenem Schieber zeigt. Zu Beginn des Schliessens befinden sich die Getriebeelemente in ihrer in Fig. 5 dargestellten gegenseitigen Lage. Die Sperrklauenkränze 23 und 42 befinden sich dabei im Eingriff und sperren die Drehung des Zahnradkörpers 17 im hebenden Sinne der Spindel. Die Sperrverzahnung der beiden Sperrklauenkränze 23 und 42 erlaubt jedoch die Drehung in entgegengesetzter Richtung, wobei der feststehende Sperrklauenkranz 42 gegen den Widerstand der Federn 48 nach unten ausweicht. Bei dieser Drehung bewegt sich die Spindelmutter zunächst nach oben, bis das Achsiallager am oberen Kraftbegrenzungsring ansteht. Dann wechselt die Achsialkraft der Mutter von Spindel-Zug auf Druck, bis sich die Spindel samt Schieber nach Überwindung der Widerstandskräfte nach unten bewegt. Diese Kräfte sind: Stopfbüchsen- und Führungsreibung, hydraulische Spindelkraft, hydraulische Sitzkraft der Rückdichtung, Eigengewicht von Spindel und Schieberplatte, je nach Einbaulage.

Die obere Kraftbegrenzungsfeder ist stärker als die Summe dieser Kräfte vorgespannt, aber schwächer als die Kraft, welche zum Ausknicken bzw. zu einer Überbeanspruchung der Spindel führen könnte.

Vom Abheben des Rückdichtungssitzers 33 und 34 an wird die Spindel nach unten geschoben bis schliesslich die Keilschieberplatte in die Schliessstellung kommt. Der Verschiebewiderstand der Spindel steigt dann an, die Spindelmutter schraubt sich nach oben und hebt den oberen Kraftbegrenzungsring 37 an. Dieser schaltet über den Endschalter 52 die Motorschliessbegrenzung ab, um bei weiterem Anheben den unteren Sperrklauenkranz 22 mit dem Sperrklauenkranz 41 zum Eingriff zu bringen, welcher die weitere Drehung in Schliessrichtung verhindert.

Wie unter Rückdichtung beschrieben, wird die kinetische Energie des Motorantriebes durch die Rutschkupplung 10 aufgezehrt.

Um zu verhindern, dass beim folgenden Öffnen eines eventuell verklemmten Keil-Schiebers, bei dem in der Anfangsphase durch Zug auf die Spindel die Spindelmutter 28 und damit der Zahnradkörper 17 nach unten geschoben werden, der obere Sperrklauenkranz 23 mit dem feststehenden Sperrklauenkranz 42 zum Eingriff kommt, hat der Bund 31 am Kopf der Spindel 30 auf dem letzten Teil des Schliesshubes den aus den Bolzen 25 und dem Ring 26 bestehenden Niederhalter und damit den oberen feststehenden Sperrklauenkranz 42 gegen den Widerstand der Federn 48 nach unten gedrückt. Nach einer gewissen Strecke des Öffnungshubes gibt der Bund 31 den Niederhalter und damit auch den Sperrklauenkranz 42 wieder frei.

Der untere Sperrklauenkranz 22 des Zahnradkörpers 17, der am Ende des Schliessvorganges blockierend in den feststehenden Sperrklauenkranz 41 einrastete, kann beim Öffnen, bei dem die Drehrichtung der Mutter umkehr, aus der Gegenverzahnung ausklinken und erlaubt damit ein unbehindertes Drehen.

Die jeweiligen relativen Stellungen der Sperrklauenkränze sind für die Fig. 1 in den Fig. 2 und 3 gezeigt, in den Fig. 4 bis 6 sind sie jeweils links von den Verzahnungen dargestellt.

Der bekannte Stellungmelder 20 zeigt an Ort und über Fernanzeige die jeweilige Stellung der Spindel bzw. des Absperrelementes an.

Anstelle der hier beschriebenen Sperrklauen-

| | |
|---|---|
| 7 | 0 004 267 | 8 |

kränze können natürlich auch Sperrwerke anderer Bauart, die in einer Drehrichtung blockieren, verwendet werden.

**Patentansprüche**

1. Absperrorgan mit Achsialkraftbegrenzung für den Stellantrieb der Betätigungsspindel (30), mit einem Antriebsblock (2) zum wahlweise motorischen oder manuellen Antrieb eines Getriebes für die Achsialverstellung der Betätigungsspindel (30) für das Absperrelement, mit einer mechanischen Überlastsicherung (10) zwischen dem Antriebsblock (2) und dem Getriebe, mit vom Hub der Spindel (30) abhängigen Schalteinrichtungen für die Begrenzung des Spindelhubes, wobei das Getriebe für die Verstellung der Spindel (30) einen mit der Spindelmutter (28) starr verbundenen Zahnradkörper (17) aufweist, dessen Lager (27) in beiden Bewegungsrichtungen der Spindel gegenüber dem Widerstand von Federn (39, 40) relativ zum Gehäuse verschieblich gelagert ist, dadurch gekennzeichnet, dass der Zahnradkörper (17) mit zwei in entgegengesetzten Drehrichtungen wirksamen Sperrwerkselementen (22, 23) verbunden ist, dass in Spindelrichtung zwischen diesen zwei in Richtung der Spindelachse nachgiebig und im Umfangsrichtung fixierte Kraftbegrenzungsringe (36, 37) vorgesehen sind, die sich unter der Kraft der Federn (39, 40) von verschiedenen Seiten her auf einem Flansch (35) des Gehäuses (1) abstützen, je ein zum Zusammenwirken mit den genannten Sperrwerkselementen (22 bzw. 23) bestimmtes und gegenüber seinem Kraftbegrenzungsring (36 bzw. 37) federnd auf das ihm zugeordnete Sperrwerkselement (22 bzw. 23) zu verschiebbares Sperrwerkselement (41 bzw. 42) aufweisen, die sich bei Normalbelastung des Getriebes unter Wirkung der die Kraftbegrenzungsringe (36, 37) belastenden Federn (39, 40) ausser Eingriff befinden, und zwischen denen der Zahnradkörper (17) mittels des Lagers (27) in Richtung der Spindelachse nachgiebig gelagert ist, dass zwei von je einem der Kraftbegrenzungsringe (36, 37) hubabhängig betätigbare elektrische Schalter (51, 52) und ein zur zeitweiligen Überbrückung des unteren Schalters (51) in der Schliesstellung des Absperrorgans dienender, hubabhängig betätigbarer Endschalter (53) vorgesehen sind, und dass die Spindel (30) in Schliesstellung des Absperrorgans derart auf das obere verschiebbare Sperrwerkselement (42) wirkt, dass es ausgekuppelt ist.

2. Absperrorgan nach Anspruch 1, dadurch gekennzeichnet, dass die Sperrwerkselemente (22, 23, 41, 42) aus in jeweils einer Drehrichtung sperrenden Sperrklauenkränzen bestehen.

3. Absperrorgan nach Anspruch 1, dadurch gekennzeichnet, dass das Mittel zum Auskuppeln des oberen verschiebbaren Sperrwerkselementes (42) aus einem auf dieses wirkenden, auf dem Zahnkörper (17) verschiebbaren Ring (26) besteht, der einen Bolzen (25) aufweist, der durch einen Schlitz (24) im Zahnradkörper (17) hindurchgreift und auf den ein am oberen Spindelende angeordneter Bund (31) zum Anschlag kommt.

**Revendications**

1. Organe d'arrêt à limitation de force axiale pour le dispositif d'entraînement de la tige de manœuvre (30) comportant un bloc d'entraînement (2) permettant, au choix, d'entraîner au moteur ou à la main, un mécanisme pour le déplacement axial de la tige (30) prévue pour l'élément obturateur, un limiteur de surcharge mécanique (10) entre le bloc d'entraînement (2) et le mécanisme de déplacement, des dispositifs de commutation dépendant de la course de la tige (30) pour limiter cette course, le mécanisme de déplacement de la tige (30) présentant une roue dentée (17) reliée rigidement à l'écrou (28) de la tige, dont le palier (27) est monté de manière à coulisser par rapport au corps de l'organe d'arrêt dans les deux sens de déplacement de la tige à l'encontre de la résistance de ressorts (39, 40), caractérisé en ce que la roue dentée (17) est reliée à deux éléments de blocage (22, 23) actifs dans des sens de rotation opposés, entre ceux-ci dans le sens de la tige, sont prévus deux anneaux limiteurs de force (36, 37) flexibles dans le sens de l'axe de la tige et fixés dans les sens circonférentiel, qui sous l'effet de la force des ressorts (39, 40), prennent appui de divers côtés sur une bride (35) du corps (1), présentent chacun un élément de blocage (41 ou 42) destiné à coopérer avec les dits éléments de blocage (22 ou 23) et pouvant coulisser élastiquement par rapport à leur anneau limiteur de force (36 ou 37) vers l'élément de blocage (22 ou 23) associé, ces éléments étant dégagés les uns des autres, pendant une charge normale du mécanisme, à l'intervention des ressorts (39, 40) sollicitant les anneaux limiteurs de charge (36, 37) et entre lesquels la roue dentée (17) est montée à rotation de manière flexible dans le sens de l'axe de la tige au moyen du palier (27), deux interrupteurs électriques (51, 52) pouvant être actionnés chacun par un des anneaux limiteurs de force (36, 37) en fonction de la course et un interrupteur de fin de course (53) pouvant être actionné en fonction de la course et servant au court-circuitage momentané de l'interrupteur inférieur (51) dans la position de fermeture de l'organe d'arrêt, et la tige (30), dans la position de fermeture de l'organe d'arrêt, agit sur l'élément de blocage supérieur coulissant (42) de manière à le désaccoupler.

2. Organe d'arrêt suivant la revendication 1, caractérisé en ce que les éléments de blocage (22, 23, 41, 42) sont formés de couronnes de griffes assurant chaque fois un blocage dans un sens de rotation.

3. Organe d'arrêt suivant la revendication 1, caractérisé en ce que le moyen servant à désaccoupler l'élément de blocage coulissant supérieur (42) est formé d'un anneau coulissant (26) agissant sur la roue dentée (17), cet anneau présentant une cheville (25) qui traverse une boutonnière (24) prévue dans la roue dentée (17) et sur laquelle vient buter un collet (31) prévu à l'extrémité supérieure de la tige de manœuvre.

**Claims**

1. Shut-off element having an axial force-limiting device for the drive mechnism employed for adjusting the actuating spindle (30), having a drive unit (2) for driving a gear assembly for axially adjusting the actuating spindle (30) for the shut-off member, by means of a motor, or manually, according to choice, having a mechanical overload-protection device (10) between the drive unit (2) and the gear assembly, having switch devices-for limiting the travel of the spindle, these devices being dependent on the travel of the spindle (30), the gear assembly for adjusting the spindle (30) possessing a gearwheel-body (17) which is rigidly attached to the spindle-nut (28), the bearing (27) of the said gearwheel-body being mounted in a manner permitting movement relative to housing, in both movement- directions, against the resistance of spirngs (39, 40), characterised in that the gearwheel-body (17) is attached to two locking elements (22, 23) which are effective in opposite directions of rotation, in that two force-limiting rings (36, 37) are provided, in the spindle direction and between thes locking elements, thes force-limiting rings being capable of yielding in the direction of the spindle axis and being fixed peripherally, and being supported, from opposite sides, against a flange (35) of the housing (1), subject to the force of the springs (39, 40), these rings possessing, in each case, a locking element (41 or 42) which is intended to interact with the abovementioned locking elements (22 or 23) and is to be capable of being shifted, relative to its force-limiting ring (36 or 37) and in a resilient manner, onto the locking element (22 or 23) to which it is assigned, these shiftable locking elements (41 or 42) being positioned, under the action of the springs (39, 40) which load the force-limiting rings (36, 37), in the disengaged position when the gear assembly is subjected to normal loading, and the gearwhell-body (17) being mounted between them, by means of the bearing (27), in a manner permitting yielding in the direction of the spindle axis, in that two electric switches (51, 52), which can be actuated, in each case, by one of the force-limiting rings (36, 37), as a function af travel, are provided, together with a limit-switch (53), which can be actuated, as a function of travel, and which serves temporarily to short-circuit the lower switch (51) when the shut-off element is in the closed position, and in that the spindle (30) acts on the upper shiftable locking element (42) in such a way that the latter is uncoupled when the shut-off element is in the closed position.

2. Shut-off element according to Claim 1, characterised in that the locking element (22, 23, 41, 42) consist of locking-claw rings which look in one direction of rotation, in each case.

3. Shut-off element according to Claim 1, characterised in that the device for uncoupling the upper shiftable lockin element (42) comprises a ring (26), which can be shifted by sliding on the gearwheel-body (17), and which acts on the said locking element, this ring possessing a pin (25), which engages through a slot (24) in the gearwheel-body (17) and on which the collar (31) located on the upper end of the spindle comes to bear.

*1/4*

**FIG.1**

**FIG.2**

**FIG.3**

2/4

FIG.4

3/4

FIG.5

FIG. 6